Europäisches Patentamt

(19) European Patent Office

Office européen des brevets

(11) Numéro de publication: **0 127 226**
**A2**

(12) **DEMANDE DE BREVET EUROPEEN**

(21) Numéro de dépôt: **84200691.8**

(22) Date de dépôt: **15.05.84**

(51) Int. Cl.³: **H 05 B 3/14**
**H 05 B 3/36, H 05 B 3/28**

(30) Priorité: **31.05.83 LU 84838**

(43) Date de publication de la demande:
**05.12.84 Bulletin 84/49**

(84) Etats contractants désignés:
**AT BE CH DE FR GB IT LI LU NL SE**

(71) Demandeur: **Société Anonyme Compagnie Générale
Belge des Isolants (COGEBI)
Avenue Lloyd George 7
B-1050 Bruxelles(BE)**

(72) Inventeur: **Dubois, André
Avenue de la Floride, 98
B-1180 Uccle(BE)**

(72) Inventeur: **Winand, René
Avenue Jean XXIII
B-1330 Rixensart(BE)**

(74) Mandataire: **Bossard, Franz et al,
ACEC - Service des Brevets Boîte Postale 4
B-6000 Charleroi(BE)**

(54) Procédé de fabrication de résistances électriques et d'appareils chauffants.

(57) Dans un procédé de fabrication de résistances électriques solidaires d'un support isolant, on dispose, en méandre ou en un autre dessin convenable, sur un support isolant minéral souple (1) un ou plusieurs rubans (2) de fibres de carbone, on recouvre le support ainsi garni d'un imprégnant minéral ou organique résistant à la chaleur et on calandre le support ainsi traité.

Fig.1

EP 0 127 226 A2

PROCEDE DE FABRICATION DE RESISTANCES ELECTRIQUES ET D'APPAREILS CHAUFFANTS.

La présente invention a pour objet un procédé de fabrication de résistances électriques et d'appareils chauffants bon marchés.

L'invention est caractérisée en ce qu'on dispose, en méandre ou en un autre dessin convenable, sur un support isolant minéral souple un ou plusieurs rubans de fibres de carbone, qu'on recouvre le support ainsi garni d'un imprégnant minéral ou organique résistant à la chaleur et qu'on calandre le support ainsi traité.

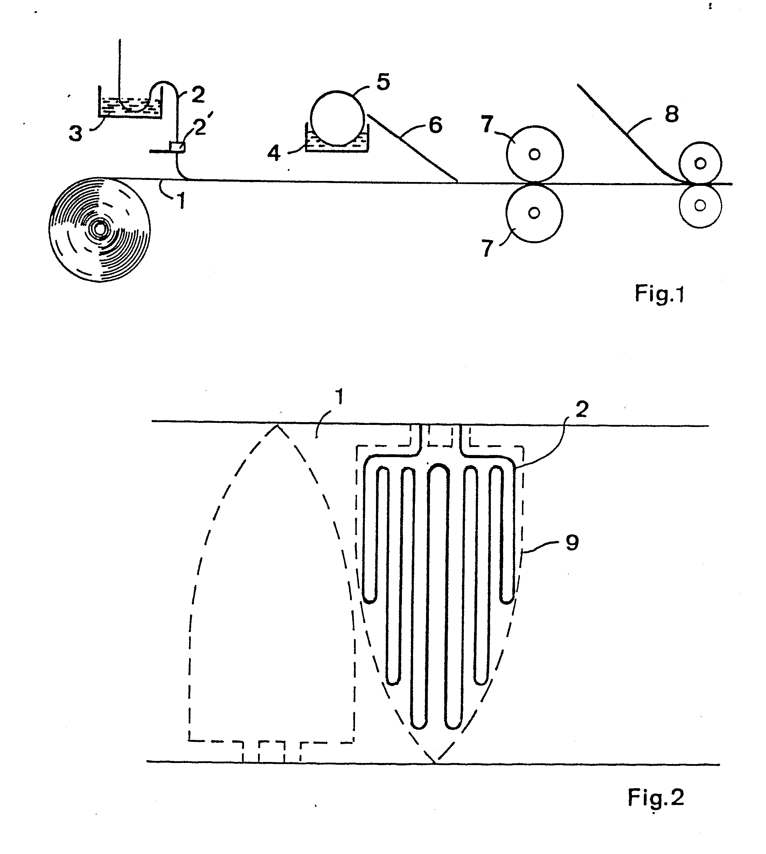

L'invention est expliquée ci-dessous par rapport à un exemple d'une forme d'exécution illustré dans le dessin annexé. La figure 1 représente un schéma du procdé suivant l'invention. La figure 2 représente une vue d'un support isolant garni d'un ruban de fibres de carbone.

A la figure 1, un support isolant minéral souple 1, par exemple du papier de mica ou du papier de paillettes de verre ou du papier constitué en un mélange de paillettes de mica et de paillettes de verre est garni d'un ruban de fibres de carbone 2 préalablement trempé dans un imprégnant adéquat 3 et disposé sur le ruban suivant un dessin choisi au moyen d'un guide 2' mobile. Le support ainsi garni est recouvert d'imprégnant 4 distribué par un tambour 5 et un râcloir 6. Le produit passe ensuite dans une calandre 7 et est séché et découpé. Il est possible en outre de le recouvrir au moins d'un côté d'une autre feuille en un isolant minéral souple, de préférence de même constitution que celui ayant servi de support initial.

L'imprégnant peut être un imprégnant minéral, par exemple un sel alcalin à base de silicate, phosphate, borate, ou borophosphate tel que le silicate de potassium ou verre soluble ou un imprégnant organique résistant à la chaleur tel qu'un vernis silicone thermo-durcissable. La souplesse du produit n'est généralement requise que pendant la fabrication. Le produit final peut être rigide.

La figure 2 montre un exemple d'un support garni d'un ruban en fibres de carbone. Les lignes pointillées 9 indiquent comment le produit est ensuite estampé. Il s'agit de résistances destinées à équiper des fers à repasser.

Il est possible aussi de remplacer les fibres de carbone par des fibres en carbure de silicium.

41.06/1907

**0127226**

## REVENDICATIONS

1. Procédé de fabrication de résistances électriques solidaires d'un support isolant,

caractérisé en ce qu'on dispose, en méandre ou en un autre dessin convenable, sur un support isolant minéral souple un ou plusieurs rubans de fibres de carbone, qu'on recouvre le support ainsi garni d'un imprégnant minéral ou organique résistant à la chaleur et qu'on calandre le support ainsi traité.

2. Procédé suivant la revendication 1, caractérisé en ce qu'on trempe les rubans en fibres de carbone préalablement dans l'imprégnant minéral ou organique.

3. Procédé suivant la revendication 1 ou 2, caractérisé en ce que le support isolant minéral souple est du papier de mica et/ou de paillettes de verre.

4. Procédé suivant une des revendications 1, 2 ou 3, caractérisé en ce que l'imprégnant est un vernis silicone

5. Procdé suivant une des revendications 1, 2 ou 3, caractérisé en ce que l'imprégnant est une des matières inorganiques suivantes ou un mélange de deux ou plusieurs de ces matières : un sel alcalin à base de silicate, de phosphate, de borate ou de borophosphate .

6. Procédé suivant une des revendications précédentes, caractérisé en ce que le produit calandré est recouvert d'au moins une autre couche du support isolant souple.

7. Procédé suivant une des revendications précédentes, caractérisé en ce qu'on découpe le produit obtenu par estampage et qu'on en garnit des appareils chauffants.

8. Procédé suivant une des revendications précédentes dans lequel les fibres de carbone sont remplacées par des fibres de carbure de silicium.

9. Appareil chauffant équipé par un produit fabriqué suivant une des revendications précédentes.

41.06/1907

0127226

Fig.1

Fig.2